# EUROPEAN PATENT SPECIFICATION

(11) **EP 3 970 971 B1**
(45) Date of publication and mention of the grant of the patent: **13.11.2024**
(21) Application number: 21197395.3
(22) Date of filing: 17.09.2021
(51) Int. Cl.: B29C 64/118, B29C 70/58, B29C 70/88, B33Y 70/10, C06B 21/00, B29C 48/28, B22F 1/10, B22F 3/20, B22F 10/18, B29C 48/02, B29C 48/12, B29C 48/16, B29C 48/92

(54) **METHOD FOR PRODUCING A COMPOSITE REACTIVE MATERIAL**
VERFAHREN ZUR HERSTELLUNG EINES REAKTIVEN VERBUNDWERKSTOFFS
PROCÉDÉ DE PRODUCTION D'UN MATÉRIAU RÉACTIF COMPOSITE

(30) Priority: 17.09.2020 IT 202000021898
(43) Date of publication of application: 23.03.2022
(73) Proprietor: MBDA ITALIA S.p.A., 00131 Roma (IT)
(72) Inventor: BANCALLARI, LUCA, I- 00131 ROMA (IT); BARBIERI, UGO, I- 00131 ROMA (IT)
(74) Representative: Carangelo, Pierluigi

(56) References cited:
- EP-A1- 1 498 255
- US-A1- 2018 370 119
- US-A1- 2019 030 789
- US-E- R E45 899

## Description

### FIELD OF THE INVENTION

The present invention relates to the technical field of reactive materials intended to be used in ammunition, and in particular relates to a method for producing a composite reactive material which is usable for example, but not exclusively, for producing ammunition parts, warheads, fragments and charge liners.

### BACKGROUND ART

As is known, composite reactive materials comprise an oxidizing agent, such as a fluoropolymer, and a metal. Such composite materials are said to be reactive due to the ability thereof to release large amounts of energy reacting to strong stresses, induced for example by the detonation of an explosive material or by a high-speed impact against a target.

Composite reactive materials have already been used as ammunition parts such as charge liners, warheads, fragments which were traditionally obtained using inert materials. The use of reactive materials to obtain these parts allows to increase the energy released during the detonation and therefore to increase the effectiveness of the weapon systems.

Currently, composite reactive materials are generally produced by compressing together a metal powder, for example an aluminum powder, and an organic polymer so as to consolidate the interstitial spaces between the particles thereof. The polymer is a thermoplastic fluoropolymer, for example. This known process is complex because it requires a precise deposition of complex shapes and an intimate mixing of a reducing material and an oxidizing material. Furthermore, the reactive materials produced with the prior art methods suffer from poor reproducibility, poor mechanical properties, high production costs; they also require post-processing prior to application.

Patent application US 2017/0073281 A1 describes a composite reactive material intended to be used in an ammunition. Such a composite reactive material is obtained by preparing a metal lattice structure which has interstitial spaces and filling these interstitial spaces with a polymer powder containing halogens, i.e., a halogenated polymer. In some of the embodiments described, the polymer used is a fluorinated polymer, i.e., a fluoropolymer.

The manufacturing method suggested in the aforementioned patent application is relatively complex, being particularly affected by the drawback of requiring three steps for producing the composite reactive material, and in particular:
- selective laser melting (SLM) to provide a metal lattice structure with interstitial spaces;
- infiltrating a reactive powder into the interstitial spaces;
- applying isostatic pressure to consolidate the powder into materials of complex shape.

It is a general object of the present description to provide a method for producing composite reactive materials which is relatively simpler and cheaper than the methods of the prior art. Other prior art methods for producing reactive materials are disclosed in US 2019/030789 A1, which discloses the features of the preamble of claim 1, and US 2018/370119 A1. However, both of said US patent publications disclose methods in which solvents are used for dissolving fluorinated polymers.

The aforesaid object, as well as other objects which will become apparent below, are achieved by a method for producing a reactive material according to claim 1. Preferred and advantageous embodiments of the aforesaid method are defined in the appended dependent claims.

The invention will be better understood from the following detailed description of particular embodiments thereof, given by way of non-limiting example, with reference to the accompanying drawings which are briefly described in the following paragraphs.

### BRIEF DESCRIPTION OF THE DRAWINGS

Figure 1 shows a general flow diagram of an exemplary and non-limiting embodiment of a method for producing a composite reactive material.
Figure 2 shows two non-limiting examples of profiled elements of composite reactive material which are producible with the method for producing composite reactive material.
Figure 3 shows a non-limiting example of a coil of composite reactive material.
Figure 4 shows a sectional view of a first embodiment of a warhead having a charge liner of composite reactive material.
Figure 5 shows a sectional view of a second embodiment of a warhead having a charge liner of composite reactive material

### DETAILED DESCRIPTION

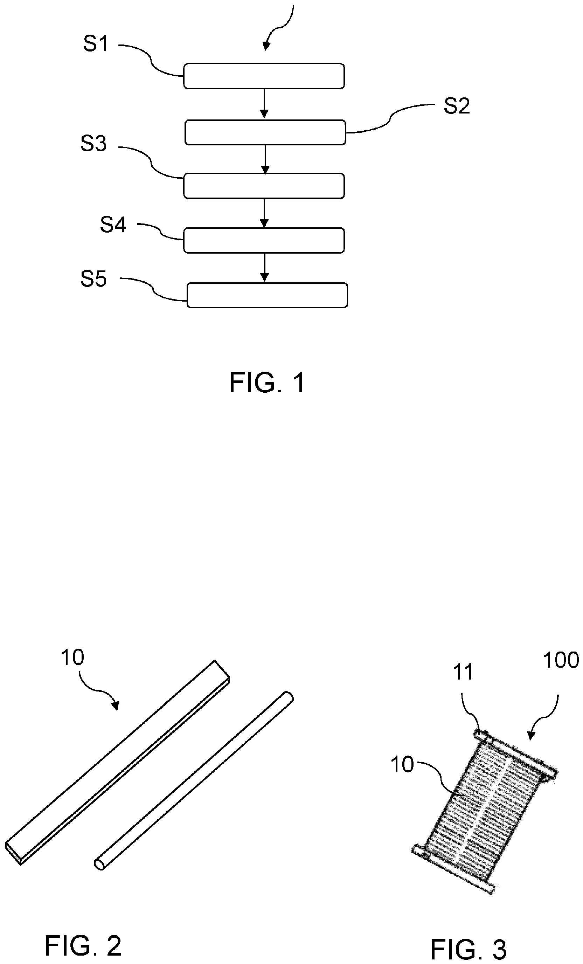

Figure 1 shows an exemplary and non-limiting embodiment of a method 1 for producing a composite reactive material. Said composite reactive material is usable, for example, but not exclusively, for producing ammunition parts, warheads, fragments, charge liners.

The method 1 comprises a step of mixing S2 a fluorinated polymer, i.e., a fluoropolymer, with a metal powder at a temperature at which the fluorinated polymer and the metal powder form a viscous mixture of composite reactive material. Preferably, such a temperature is in the range of 160°C-260°C. Viscous mixture means a mixture having a viscosity such as to make the mixture extrudable. Preferably, the fluorinated polymer is a thermoplastic fluorinated polymer.

Preferably, the mixing step S2 comprises: - a first sub-step of heating and simultaneously mixing the fluorinated polymer, bringing it above the melting temperature or the glass transition temperature;
- a second sub-step, following the first sub-step, of adding the metal powder and mixing the fluorinated polymer and the metal powder together.

Initially, i.e., at the beginning of the mixing step S2, the fluorinated polymer can be in the form of granules, flocs, or powder.

In order to form the viscous mixture, the production method 1 does not use solvents. This means that the viscous mixture is obtained only by a thermal and mechanical process, in other words a process in which no solvents, in particular organic solvents, are used to soften or melt the fluorinated polymer from an initial state in which it is solid.

The metal powder is preferably a powder of one or more of the following metal materials: titanium, aluminum, zirconium, tantalum, molybdenum, tungsten. In accordance with a particularly advantageous embodiment, the metal powder has an average particle size between 10 µm and 100 µm.

Preferably, the fluoropolymer includes one or more of the following materials: fluorinated ethylene propylene or FEP, polyvinyl fluoride or PVF, polyvinylidene fluoride or PVDF, Nafion, THV, MFA.

In accordance with a preferred embodiment, the viscous mixture of composite reactive material comprises from 20% to 60% by weight of metal powder and from 80% to 40% by weight of fluorinated polymer.

In accordance with an advantageous embodiment, the mixing step S2 is carried out in a mixer having a receptacle defining a mixing chamber and a thermostat adapted to control the temperature of the mixing chamber. Preferably, the aforesaid mixer is an internal mixer or a batch mixer. In accordance with a particularly advantageous embodiment, the mixer is fitted with rotating blades adapted to make the mixture of composite reactive material homogeneous. Possible non-limiting examples of mixers having the features described above are currently marketed by the company Brabender^{®} GmbH & Co KG under the names Internal Mixer 350, or Internal Mixer 350 E or Internal Mixer 350 S.

In accordance with an advantageous embodiment, the method 1 during the mixing step S2 comprises an operation of acquiring at least one viscosity measurement of the mixture of composite material, in particular in order to evaluate the possibility of extruding said mixture, i.e., the suitability of the mixture to being extruded. For example, the aforesaid viscosity measurement is automatically acquired by the mixer during mixing, for example by measuring the shear stress of a mixing tool included in the mixer.

The method 1 further comprises a step of extruding S3 the viscous mixture of composite material to produce one or more profiled elements 10 of composite reactive material. As shown in figure 2, such profiled elements 10 are preferably thread-like elements having for example a rectangular, square, or preferably circular section. The extrusion step S3 can be carried out by a common twin-screw extruder for polymers, for example a continuous screw extruder, preferably equipped with a pressure transducer for controlling the pressure in the chamber, a volumetric dosing device for material insertion, a degassing system, a system for checking the diameter of the extruded profiled elements.

In accordance with a possible embodiment, if the thread-like elements have a circular section, the diameter of such elements is preferably in the range of 0.5 mm - 3 mm.

From a practical viewpoint, it is possible to take the mixture of composite reactive material from the mixer and feeding the extruder with such a mixture. However, it is also possible to provide for the method 1 being carried out by a single dedicated machine comprising a first section adapted to carry out the mixing step S2 and a second section operatively connected to the first section and adapted to carry out the extrusion step S3.

In accordance with an advantageous embodiment, in order to facilitate the extrusion step S3, the fluorinated polymer consists of two or more different molecular units, referred to as monomers. Some examples of such polymers are listed below:
- Polytetrafluoroethylene (PFTE) modified with the addition of co-monomers, an example of which is currently marketed under the name HYFLON^{®} by Solvay;
- Fluorinated ethylene propylene (FEP), which is a copolymer consisting of hexafluoropropylene and tetrafluoropropylene. It was invented by DuPont and sold under the trade name Teflon FEP. Other trade names are Neoflon FEP from Daikin or Dyneon FEP from Dyneon/3M;
- Perfluoroalkoxy (PFA), which was invented by DuPont and sold under the name Teflon^{®}-PFA. A similar product is available from Daikin under the name Neoflon-PFA or from Solvay under the name Hyflon-PFA;
- KYNAR or PVDF, a homopolymer of vinylidene fluoride;
- Ethylene Tetrafluoroethylene (ETFE).

Alternatively or in addition to the use of fluoropolymers consisting of two or more different molecular units, in order to facilitate the extrusion of the mixture of reactive material, it is possible to provide the method 1 comprising a step of adding S1, before or during the mixing step S2, a plasticizing material, preferably in an amount representing a percentage by weight of said mixture in the range of 1% -5%. Possible examples of plasticizers which are usable in the method 1 are:
- ZONYL^{™} currently produced by The Chemours Company;
- Fluoro-alicyclic oligomers;
- Perfluoroperhydrophenanthrene.

In accordance with an embodiment, the method 1 further comprises a step of winding S4 the profiled elements 10 to form one or more coils or spirals 100 of composite reactive material. With reference to figure 3, a thread-like profiled element 10 is shown wound in a coil about a reel 11.

In accordance with a particularly advantageous embodiment, the method 1 further comprises a step of feeding S5 a 3D printer with said one or more profiled elements 10 to produce, i.e., print, a shaped component of an ammunition. Such a component is, for example, a charge liner, a warhead, or a fragment. The feeding step S5 can be carried out immediately after the extruding step, for example in the same dedicated machinery, or the profiled elements produced by the extruding step S3 can be stored and/or transported, for example, spirally wound and then used later for the 3D printing of shaped components of ammunition.

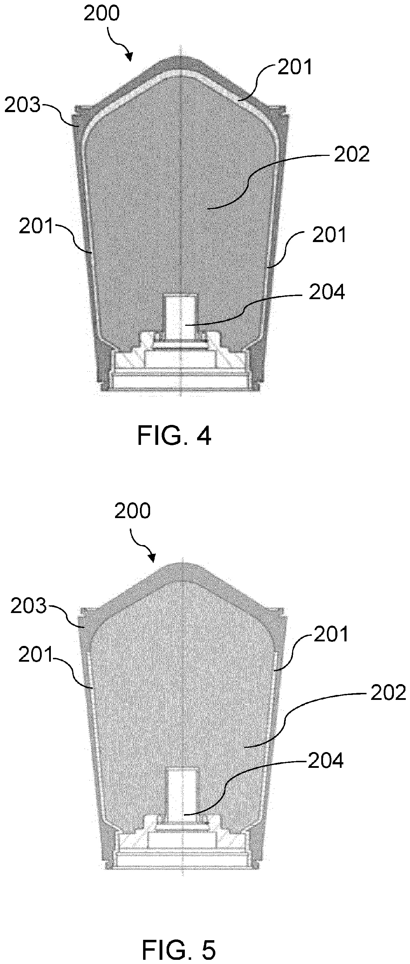

Through the feeding step S5, the 3D printer can print components with complex shapes. Figure 4 shows a sectional view of a first embodiment of a warhead 200, comprising a charge liner 201 having an ogive shape. The charge liner 201 is made of the reactive material obtained with the method 1 described above and is obtained by 3D printing (step S5 of the method 1 described above).

The charge liner 201 surrounds a cavity filled with an explosive charge 202, for example a Plastic Bonded Explosive (PBX) charge.

Optionally, the warhead 200 comprises a metal outer liner 201, for example a steel outer liner. The warhead 200 further comprises a detonator 204.

Figure 5 shows a sectional view of a warhead 200 in accordance with a second embodiment. The warhead 200 in figure 5 differs from the warhead 200 in figure 4 in that, instead of having an ogive shape, the charge liner 201 has a tubular shape, for example a flared tubular shape. In the warhead 200 in figure 5, the charge liner 201 is also made of the reactive material obtained with the method 1 described above and is obtained by 3D printing (step S5 of the method 1 described above). Furthermore, also in this case the charge liner 201 surrounds a cavity filled with an explosive charge 202, for example a Plastic Bonded Explosive (PBX) charge.

From the above, it is apparent that a method for producing a composite reactive material of the type described above allows to fully achieve the preset objects in terms of overcoming the drawbacks of the prior art. In fact, with the above method it is possible to produce a composite reactive material in a relatively simple, low-cost, and quick manner. Furthermore, the method described above has the advantage of not requiring the use of solvents to obtain the viscous mixture, such as organic solvents.

Without prejudice to the principle of the invention, the embodiments and the constructional details may be broadly varied with respect to the above description disclosed by way of non-limiting example, without departing from the scope of the invention as defined in the appended claims.

## Claims

1. A method (1) for producing a composite reactive material, comprising the steps of:
- mixing (S2) a fluorinated polymer with a metal powder at a temperature at which the fluorinated polymer and the metal powder form a viscous mixture of composite reactive material;
- extruding (S3) the viscous mixture to produce one or more profiled elements (10) of composite reactive material;
**characterized in that** in said method no solvent is used to form said viscous mixture.

2. A method (1) according to claim 1, wherein the metal powder is a powder of one or more of the following metal materials: titanium, aluminum, zirconium, tantalum, molybdenum, tungsten.

3. A method (1) according to claim 1 or 2, wherein said fluoropolymer includes one or more of the following materials: fluorinated ethylene propylene or FEP, polyvinyl fluoride or PVF, polyvinylidene fluoride or PVDF, Nafion, THV, MFA.

4. A method (1) according to any one of the preceding claims, wherein the metal powder has an average particle size between 10 µm and 100 µm.

5. A method (1) according to any one of the preceding claims, wherein said temperature is in the range of 160° C - 260° C.

6. A method (1) according to any one of the preceding claims, wherein said viscous mixture comprises from 20% to 60% by weight of metal powder and from 80% to 40% by weight of fluorinated polymer.

7. A method (1) according to any one of the preceding claims, wherein the mixing step (S2) is carried out in a mixer having a receptacle defining a mixing chamber and a thermostat adapted to control the temperature of the mixing chamber, wherein said mixer is preferably an internal mixer or a batch mixer.

8. A method (1) according to claim 7, wherein said mixer is provided with rotating blades adapted to make said mixture homogeneous.

9. A method (1) according to any one of the preceding claims, wherein said fluorinated polymer consists of two or more different molecular units.

10. A method (1) according to any one of the preceding claims, comprising a step of adding (S1), before or during the mixing step (S2), a plasticizing material, preferably in an amount representing a percentage by weight of said mixture in the range of 1%-5%.

11. A method (1) according to any one of the preceding claims, further comprising a step of winding (S4) said profiled elements (10) to form one or more coils or spirals (100) of composite reactive material.

12. A method (1) according to any one of the preceding claims, wherein the mixing step (S2) comprises:
- a first sub-step of heating and simultaneously mixing the fluorinated polymer, bringing it above the melting temperature or the glass transition temperature;
- a second sub-step, following the first sub-step, of adding the metal powder and mixing the fluorinated polymer and the metal powder together.

13. A method (1) according to any one of the preceding claims, further comprising a step of feeding (S5) a 3D printer with said one or more profiled elements (10) to produce a shaped component of an ammunition.

14. A method (1) according to claim 13, wherein said shaped component is a charge liner (201) of a warhead (200) and wherein the charge liner (201) surrounds a cavity which is fillable with an explosive charge (202) and preferably has a tubular shape or an ogive shape.

## Patentansprüche

1. Verfahren (1) zur Herstellung eines reaktiven Verbundwerkstoffs, das die Schritte umfasst von:
- Mischen (S2) eines fluorierten Polymers mit einem Metallpulver bei einer Temperatur, bei der das fluorierte Polymer und das Metallpulver eine viskose Mischung aus reaktivem Verbundwerkstoff bilden;
- Extrudieren (S3) der viskosen Mischung, um ein oder mehrere profilierte Elemente (10) aus reaktivem Verbundwerkstoff herzustellen;
**dadurch gekennzeichnet, dass** bei dem Verfahren kein Lösungsmittel zum Bilden der viskosen Mischung verwendet wird.

2. Verfahren (1) nach Anspruch 1, wobei das Metallpulver ein Pulver aus einem oder mehreren der folgenden Metallwerkstoffe ist: Titan, Aluminium, Zirkonium, Tantal, Molybdän, Wolfram.

3. Verfahren (1) nach Anspruch 1 oder 2, wobei das Fluorpolymer einen oder mehrere der folgenden Werkstoffe umfasst: fluoriertes Ethylenpropylen oder FEP, Polyvinylfluorid oder PVF, Polyvinylidenfluorid oder PVDF, Nafion, THV, MFA.

4. Verfahren (1) nach einem der vorhergehenden Ansprüche, wobei das Metallpulver eine durchschnittliche Partikelgröße zwischen 10 µm und 100 µm aufweist.

5. Verfahren (1) nach einem der vorhergehenden Ansprüche, wobei die Temperatur im Bereich von 160 °C-260 °C liegt.

6. Verfahren (1) nach einem der vorhergehenden Ansprüche, wobei die viskose Mischung 20 bis 60 Gew.-% Metallpulver und 80 bis 40 Gew.-% fluoriertes Polymer umfasst.

7. Verfahren (1) nach einem der vorhergehenden Ansprüche, wobei der Mischschritt (S2) in einem Mischer durchgeführt wird, der einen Behälter aufweist, der eine Mischkammer definiert, und einen Thermostat, der zum Regeln der Temperatur der Mischkammer geeignet ist, wobei der Mischer vorzugsweise ein Innenmischer oder ein Chargenmischer ist.

8. Verfahren (1) nach Anspruch 7, wobei der Mischer mit rotierenden Schaufeln versehen ist, die geeignet sind, die Mischung homogen zu machen.

9. Verfahren (1) nach einem der vorhergehenden Ansprüche, wobei das fluorierte Polymer aus zwei oder mehr verschiedenen Moleküleinheiten besteht.

10. Verfahren (1) nach einem der vorhergehenden Ansprüche, das einen Schritt des Zugebens (S1) eines plastifizierenden Werkstoffs vor oder während des Mischschritts (S2) umfasst, vorzugsweise in einer Menge, die einen Gewichtsprozentsatz der Mischung im Bereich von 1 %-5 % darstellt.

11. Verfahren (1) nach einem der vorhergehenden Ansprüche, das ferner einen Schritt des Wickelns (S4) der profilierten Elemente (10) umfasst, um eine oder mehrere Spulen oder Spiralen (100) aus reaktivem Verbundwerkstoff zu bilden.

12. Verfahren (1) nach einem der vorhergehenden Ansprüche, wobei der Mischschritt (S2) umfasst:
- einen ersten Teilschritt des Erhitzens und gleichzeitigen Mischens des fluorierten Polymers, um es über die Schmelztemperatur oder die Glasübergangstemperatur zu bringen;
- einen zweiten Teilschritt des Zugebens des Metallpulvers und des Mischens des fluorierten Polymers und des Metallpulvers miteinander nach dem ersten Teilschritt.

13. Verfahren (1) nach einem der vorhergehenden Ansprüche, das ferner einen Schritt des Versorgens (S5) eines 3D-Druckers mit dem einen oder den mehreren profilierten Elementen (10) zum Herstellen einer geformten Komponente einer Munition umfasst.

14. Verfahren (1) nach Anspruch 13, wobei es sich bei der geformten Komponente um eine Ladungsauskleidung (201) eines Gefechtskopfes (200) handelt und wobei die Ladungsauskleidung (201) einen Hohlraum umgibt, der mit einer Sprengladung (202) füllbar ist, und vorzugsweise eine Röhrenform oder eine Spitzbogenform aufweist.

## Revendications

1. Procédé (1) de production d'un matériau réactif composite, comprenant les étapes consistant à :
- mélanger (S2) un polymère fluoré avec une poudre métallique à une température à laquelle le polymère fluoré et la poudre métallique forment un mélange visqueux de matériau réactif composite ;
- extruder (S3) le mélange visqueux pour produire un ou plusieurs éléments profilés (10) de matériau composite réactif ;
**caractérisé en ce que** dans ledit procédé aucun solvant n'est utilisé pour former ledit mélange visqueux.

2. Procédé (1) selon la revendication 1, dans lequel la poudre métallique est une poudre d'un ou plusieurs des matériaux métalliques suivants : titane, aluminium, zirconium, tantale, molybdène, tungstène.

3. Procédé (1) selon la revendication 1 ou 2, dans lequel ledit fluoropolymère comprend un ou plusieurs des matériaux suivants : éthylène propylène fluoré ou FEP, polyfluorure de vinyle ou PVF, polyfluorure de vinylidène ou PVDF, Nafion, THV, MFA.

4. Procédé (1) selon l'une quelconque des revendications précédentes, dans lequel la poudre métallique a une taille de particule moyenne comprise entre 10 µm et 100 µm.

5. Procédé (1) selon l'une quelconque des revendications précédentes, dans lequel ladite température est dans la plage de 160 °C à 260 °C.

6. Procédé (1) selon l'une quelconque des revendications précédentes, dans lequel ledit mélange visqueux comprend de 20 % à 60 % en poids de poudre métallique et de 80 % à 40 % en poids de polymère fluoré.

7. Procédé (1) selon l'une quelconque des revendications précédentes, dans lequel l'étape de mélange (S2) est réalisée dans un mélangeur ayant un réceptacle délimitant une chambre de mélange et un thermostat adapté pour réguler la température de la chambre de mélange, dans lequel ledit mélangeur est de préférence un mélangeur interne ou un mélangeur discontinu.

8. Procédé (1) selon la revendication 7, dans lequel ledit mélangeur est pourvu de lames rotatives adaptées pour rendre ledit mélange homogène.

9. Procédé (1) selon l'une quelconque des revendications précédentes, dans lequel ledit polymère fluoré est constitué de deux ou plus de deux unités moléculaires différentes.

10. Procédé (1) selon l'une quelconque des revendications précédentes, comprenant une étape d'ajout (S1), avant ou pendant l'étape de mélange (S2), d'un matériau plastifiant, de préférence en une quantité représentant un pourcentage en poids dudit mélange dans la plage de 1 % à 5 %.

11. Procédé (1) selon l'une quelconque des revendications précédentes, comprenant en outre une étape d'enroulement (S4) desdits éléments profilés (10) pour former une ou plusieurs bobines ou spirales (100) de matériau réactif composite.

12. Procédé (1) selon l'une quelconque des revendications précédentes, dans lequel l'étape de mélange (S2) comprend :
- une première sous-étape de chauffage et de mélange simultané du polymère fluoré, l'amenant au-dessus de la température de fusion ou de la température de transition vitreuse ;
- une seconde sous-étape, suivant la première sous-étape, d'ajout de la poudre métallique et de mélange ensemble du polymère fluoré et de la poudre métallique.

13. Procédé (1) selon l'une quelconque des revendications précédentes, comprenant en outre une étape d'alimentation (S5) d'une imprimante 3D avec lesdits un ou plusieurs éléments profilés (10) pour produire un constituant façonné d'une munition.

14. Procédé (1) selon la revendication 13, dans lequel ledit constituant façonné est une chemise de charge (201) d'une ogive (200) et dans lequel la chemise de charge (201) entoure une cavité qui peut être remplie d'une charge explosive (202) et a de préférence une forme tubulaire ou une forme d'ogive.
